# EUROPÄISCHE PATENTSCHRIFT

(11) **EP 1 031 742 B1**
(45) Veröffentlichungstag und Bekanntmachung des Hinweises auf die Patenterteilung: **27.04.2005**
(21) Anmeldenummer: 00102217.7
(22) Anmeldetag: 10.02.2000
(51) Int. Cl.: F16B 35/06

(54) **Senkkopfschraube**
Countersunk screw head
Vis à tête conique

(30) Priorität: 23.02.1999 DE 29903232 U
(43) Veröffentlichungstag der Anmeldung: 30.08.2000
(73) Patentinhaber: A-Z Ausrüstung und Zubehör GmbH & Co. KG, 45525 Hattingen (DE)
(72) Erfinder: Dicke, Robert, 58256 Ennepetal (DE)
(74) Vertreter: Patentanwälte Dr. Solf & Zapf

(56) Entgegenhaltungen:
- EP-A- 0 705 987
- DE-U- 29 600 065
- DE-U- 29 811 536
- US-A- 5 516 248

## Beschreibung

Die Erfindung betrifft eine Senkkopfschraube mit einem Kopf, mit einem Schaft und mit einem sich zumindest teilweise über den Schaft erstreckenden Gewinde, wobei der Kopf eine zumindest abschnittsweise in Richtung auf den Schaft konisch zulaufende Auflagefläche aufweist, wobei in einem unteren, dem Schaft zugewandten Bereich der Auflagefläche Fräsrippen angeordnet sind, wobei das Gewinde eine Gewindekante aufweist, die über den Schaft, zumindest abschnittsweise, mit konstantem Außenradius verläuft.

Senkkopfschrauben sind bekannt. Sie können beispielsweise im Kopf eine Antriebsvertiefung, wie eine Schlitzung oder Kreuzschlitzung, zum Angriff eines Schraubendrehers aufweisen. Das freie Schaftende kann als Spitze ausgebildet sein. Insbesondere kann es sich um Senkkopfschrauben handeln, die auf das Material, in das sie eingeschraubt werden, eine gewindeformende oder gewindeschneidende Wirkung ausüben.

Damit für eine Antriebsvertiefung im Kopf genügend Raum zur Verfügung steht, muß dieser entsprechend voluminös ausgebildet sein. Beispielsweise ist es, um dies zu erreichen, bekannt, für die konisch in Richtung auf den Schaft zulaufende Auflagefläche zwei verschiedene Kopfabschnitte vorzusehen, in denen die Anlagefläche unter unterschiedlichen Winkeln konvergiert.

Da am Kopf kein Gewinde vorgesehen ist, kann das Problem auftreten, daß durch Schrauben mit einem voluminösen Senkkopf, nachdem sie ganz oder fast vollständig eingedreht sind, eine unerwünschte Materialzerstörung insbesondere an der Oberfläche, wie - je nach Art des Materials - ein Splittern, Reißen oder eine Verformung, auftritt.

Insbesondere ist eine Senkkopfschraube der eingangs beschriebenen Art aus der US-A-5 516 248 bekannt. Bei dieser Schraube liegen die Fräsrippen vollständig außerhalb eines äußeren Radius des Schaftes sowie höchstens zu einem Bruchteil ihrer Länge im Querschnitt gesehen in radialer Richtung unter der Gewindekante. Die bekannten - stark raumgreifenden - Rippen vergrößern beim Eindrehen der Schraube die Außenkontur im Bereich der konisch zulaufenden Auflagefläche des Kopfes über das Maß eines Loches hinaus, wie es beim Eindrehen der Schraube durch das Gewinde gebohrt wird. Dadurch kann, nachdem die Schraube fast vollständig eingedreht ist, eine unerwünschte Materialzerstörung, wie erwähnt - insbesondere an der Oberfläche, wie ein Splittern und Reißen oder eine Verformung, im Bereich außerhalb eines Außendurchmessers des durch das Gewinde gebohrten Loches auftreten.

Der Erfindung liegt die Aufgabe zugrunde, eine Senkkopfschraube der eingangs beschriebenen Art durch eine Gestaltung der Anordnung der Fräsrippen derart zu verbessern, daß die vorstehend genannten negativen Erscheinungen vermieden werden können, wobei die Wirkung der Fräsrippen im Vergleich zu der bekannten Senkkopfschraube hinsichtlich des Vermeidens einer unerwünschten Materialzerstörung verbessert wird.

Die Aufgabe der Erfindung wird dadurch gelöst, daß sich die Fräsrippen in der Unteransicht gesehen in einem Ringbereich erstrecken, der außenseitig durch den konstant verlaufenden Außenradius der Gewindekante und innenseitig durch einen äußeren Radius des Schaftes begrenzt ist.

Die Fräsrippen bewirken beim Eindrehen einer erfindungsgemäßen Senkkopfschraube eine Materialwegnahme, wodurch auch bei einer Senkkopfschraube, deren Kopf größer ist als der Norm entsprechend eine unerwünschte Materialzerstörung wirksam verhindert werden kann, wobei die erfindungsgemäße Ausbildung hinsichtlich des angestrebten Wirksamwerdens der Fräsrippen ein durch die Fräsrippenanordnung erzieltes Optimum darstellt.

Weitere vorteilhafte Ausgestaltungsmerkmale der Erfindung sind in den Unteransprüchen sowie der folgenden Beschreibung enthalten.

Anhand zweier, in der Zeichnung dargestellter, bevorzugter Ausführungsbeispiele soll im folgenden die Erfindung näher erläutert werden. Dabei zeigen:
- Fig. 1: in der Vorderansicht, eine vergrößerte Darstellung eines ersten Ausführungsbeispiels einer erfindungsgemäßen Senkkopfschraube,
- Fig. 2: die erste Ausführung einer erfindungsgemäßen Senkkopfschraube in einer entlang der Linie II-II in Fig. 1 geschnittenen Ansicht,
- Fig. 3: in der Vorderansicht, eine vergrößerte Darstellung eines zweiten Ausführungsbeispiels einer erfindungsgemäßen Senkkopfschraube,
- Fig. 4: die zweite Ausführung einer erfindungsgemäßen Senkkopfschraube in einer entlang der Linie IV-IV in Fig. 3 geschnittenen Ansicht.

In den verschiedenen Figuren der Zeichnung sind gleiche Teile mit denselben Bezugszeichen versehen, so daß sie in der Regel auch jeweils nur einmal beschrieben werden.

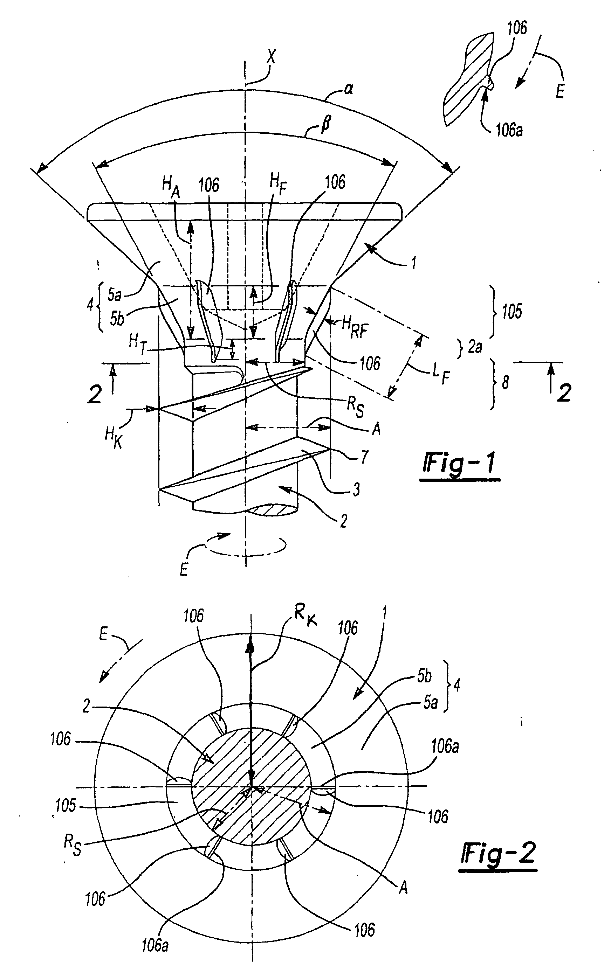

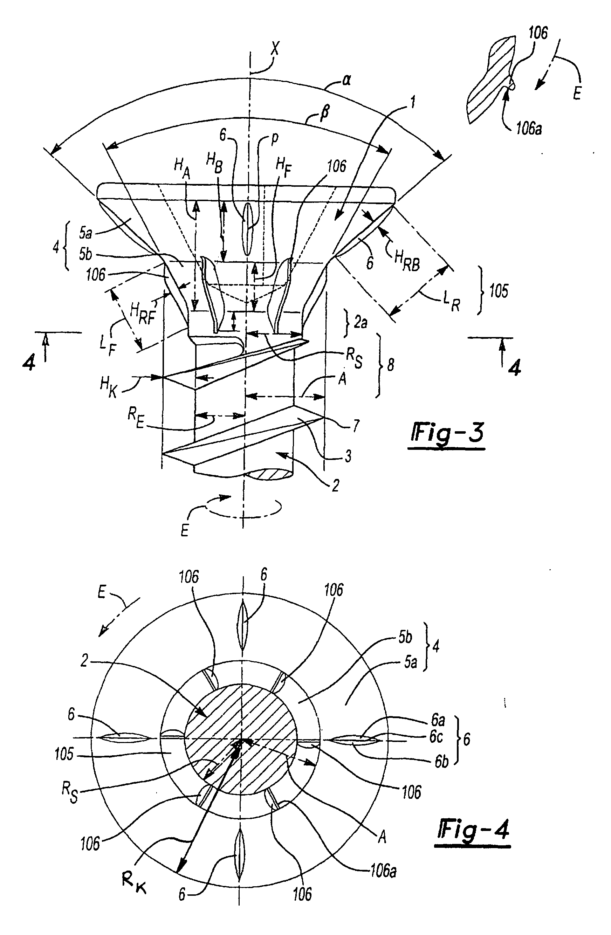

Wie die Zeichnung zeigt, weist eine erste Ausführung (Fig. 1 und 2) einer erfindungsgemäßen Senkkopfschraube einen Kopf 1, einen Schaft 2 und ein sich zumindest teilweise über den Schaft 2 erstreckendes Gewinde 3 auf. Der Kopf 1 wiederum weist eine zumindest abschnittsweise in Richtung auf den Schaft 2 konisch zulaufende Auflagefläche 4 auf. In einem unteren, dem Schaft 2 zugewandten Bereich 105 der Auflagefläche 4 sind Fräsrippen 106 angeordnet.

In der dargestellten Ausführung sind sechs Fräsrippen 106 vorgesehen, es könnten aber auch mehr oder weniger sein, z.B. drei, vier, acht oder mehr. Durch die Anzahl und Ausbildung der Fräsrippen 106 läßt sich die erwünschte Materialwegnahme beim Eindrehen einer erfindungsgemäßen Senkkopfschraube erhöhen oder senken und somit an das Material anpassen.

Die konisch in Richtung auf den Schaft 2 zulaufende Auflagefläche 4 konvergiert in einem ersten, dem Schaft 2 abgewandten Kopfabschnitt 5a unter einem Winkel α von etwa 90° und in einem zweiten, dem Schaft 2 zugewandten Kopfabschnitt 5b unter einem Winkel β von etwa 50° bis 65°. Auf diese Weise wird erreicht, daß trotz relativ schmaler Form des Kopfes 1 im Kopf 1 genügend Raum für einen nicht näher bezeichneten, in Fig. 1 mit Strichlinien gezeichneten Kreuzschlitz zum Eingriff eines Schraubendrehers zur Verfügung steht. Der Bereich 105 der Auflagefläche 4, in dem die Fräsrippen 106 angeordnet sind, ist dabei der dem Schaft 2 zugewandte zweite Kopfabschnitt 5b.

Darüber hinaus erstrecken sich die Fräsrippen 106 bis in einen kopfnahen Bereich 2a des Schaftes 2, wo der Schaft 2 einen Radius R_{S} aufweist, der größer ist als ein Kernradius R_{E} des Schaftes 2 im Bereich 2b des Gewindes 3. Im kopfnahen Bereich 2a sind die Fräsrippen 106 jeweils mit dem Schaft 2 verbunden, wodurch eine hohe mechanische Stabilität der Fräsrippen 106 gewährleistet ist.

Der Bereich 105 der Auflagefläche 4, in dem die Fräsrippen 106 angeordnet sind, ist hinsichtlich seiner axialen Länge H_{F} nicht größer als etwa 60 Prozent einer axialen Länge H_{A} der konisch zulaufenden Auflagefläche 4. Hinzu kommt eine axiale Länge H_{T} im kopfnahen Bereich 2a, die etwa ein Drittel der axialen Länge H_{F} des in der Auflagefläche 4 liegenden Bereiches 105 betragen kann. So wirken die Fräsrippen 106 vorteilhafterweise erst dann, wenn der Kopf 1 der erfindungsgemäße Senkkopfschraube beginnt, in das Material einzudringen. Eine Materialzerstörung im Sinne eines Splitterns, Reißens oder einer unerwünschten Verformung wird dadurch verhindert.

Die Fräsrippen 106 können - wie dargestellt - hinsichtlich ihrer Längserstreckung L_{F} auf Mantellinien der Auflagefläche 4 verlaufen, deren Projektion auf einen durch den Kopf 1 verlaufenden Abschnitt der Schraubenlängsachse X-X der erfindungsgemäßen Schraube fällt. Auf diese Weise ist die Fräs- bzw. Schabwirkung, die die Fräsrippen 106 auf das Material ausüben, besonders groß.

Das Gewinde 3 weist eine Gewindekante 7 auf, die in einem Hauptbereich in Form einer Schraubenlinie in konstantem Abstand (Außenradius A des Gewindes 3) zu einem durch den Schaft 2 verlaufenden Abschnitt der Schraubenlängsachse X-X verläuft. Die Gewindekante 7 kann dabei in einem dem Kopf 1 zugewandten Endbereich 8 des Gewindes 3 eine abnehmende Höhe H_{K} aufweisen. Die Fräsrippen 106 können sich in einer hinsichtlich ihres Wirksamwerdens optimalen Anordnung - in der Unteransicht bzw. in der in Fig. 2 dargestellten Schnittdarstellung gesehen - in einem Ringbereich erstrekken, der außenseitig durch den Außenradius A des Gewindes 3 und innenseitig durch den äußeren Radius R_{S} des Schaftes 2 im kopfnahen Bereich 2a begrenzt ist.

Dabei ist es außerdem von Vorteil, wenn die Fräsrippen 106 über ihre Längserstreckung L_{F} eine veränderliche Höhe H_{RF} aufweisen. In der gezeigten Darstellung steigt die Höhe H_{RF} der Fräsrippen 106 über der Längserstreckung L_{F} der Fräsrippen 106 außenseitig beginnend von einem Wert Null relativ zur Auflagefläche 4 zunächst an und verläuft dann relativ zur Auflagefläche 4 etwa konstant. Dadurch wird eine gleichmäßige Fräswirkung über die Längserstreckung L_{F} der Fräsrippen 106 erreicht. Der Maximalwert der Höhe H_{RF} der Fräsrippen 106 relativ zur Auflagefläche 4 kann dabei günstigerweise, insbesondere bei einem äußeren Radius R_{K} des Kopfes 1 von etwa 4 bis 5 mm, etwa 0,3 mm betragen.

Eine optimale Formgestaltung der Fräsrippen 106 liegt vor, wenn diese - wie die Zeichnung veranschaulicht - jeweils in ihrem Grundriß etwa die Form eines Kreissegments aufweisen, wobei eine in Einschraubrichtung E weisende Kante 106a des Kreissegments flach oder konkav ausgebildet ist.

Eine zweite Ausführung einer erfindungsgemäßen Senkkopfschraube zeigen Fig. 3 und 4. Diese Ausführung unterscheidet sich hinsichtlich der Fräsrippen 106 nicht von der vorbeschriebenen ersten Ausführung. In einem oberen, dem Schaft 2 abgewandten Bereich 5 der Auflagefläche 4 sind jedoch zusätzlich Bremsrippen 6 angeordnet. Diese Bremsrippen 6 bewirken beim Eindrehen einer erfindungsgemäßen Senkkopfschraube eine erhöhte Flächenpressung zwischen der Schraube und dem Material, in das sie eingedreht wird, beispielsweise an der Metalloberfläche eines Beschlags. Dadurch erhöht sich der Reibwiderstand und wirkt dem Eindrehmoment des Schraubendrehers entgegen, wodurch ein Durchdrehen der Schraube wirksam verhindert werden kann.

In der dargestellten Ausführung sind vier Bremsrippen 6 vorgesehen, es könnten aber auch mehr oder weniger sein, z.B. zwei, drei oder sechs.

Der Bereich 5 der Auflagefläche 4, in dem die Bremsrippen 6 angeordnet sind, ist dabei der dem Schaft 2 abgewandte erste Kopfabschnitt 5a.

Der Bereich 5 der Auflagefläche 4, in dem die Bremsrippen 6 angeordnet sind, ist hinsichtlich seiner axialen Länge H_{B} nicht größer als etwa 60 Prozent einer axialen Länge H_{A} der konisch zulaufenden Auflagefläche 4. So wirken die Bremsrippen 6 vorteilhafterweise erst dann, nachdem die erfindungsgemäße Senkkopfschraube fast vollständig eingedreht ist. Ein Durchdrehen der Schraube wird dadurch verhindert, und im Material geformte oder geschnittene Gewindegänge können geschützt werden.

Die Bremsrippen 6 können - wie dargestellt - hinsichtlich ihrer Längserstreckung L_{R} auf Mantellinien der Auflagefläche 4 verlaufen, deren Projektion auf einen durch den Kopf 1 verlaufenden Abschnitt der Schraubenlängsachse X-X der erfindungsgemäßen Schraube fällt. Auf diese Weise ist die die Flächenpressung zwischen Schraube und Material erhöhende Wirkung der Bremsrippen 6 besonders groß.

Die Bremsrippen 6 können sich in einer hinsichtlich ihres Wirksamwerdens optimalen Anordnung - in der Unteransicht bzw. in der in Fig. 2 dargestellten Schnittdarstellung gesehen - in einem Ringbereich erstrecken, der außenseitig etwa durch einen äußeren Radius R_{K} des Kopfes 1 und innenseitig etwa durch den Außenradius A des Gewindes 3 begrenzt ist.

Dabei ist es außerdem von Vorteil, wenn die Bremsrippen 6 über ihre Längserstreckung L_{R} eine veränderliche Höhe H_{RB} aufweisen. In der gezeigten Darstellung verläuft die Höhe H_{RB} der Bremsrippen 6 über der Längserstreckung L_{R} der Bremsrippen 6 von einem Wert Null relativ zur Auflagefläche 4 ausgehend bogenförmig und endet wiederum bei einem Wert Null relativ zur Auflagefläche 4. Der Maximalwert der Höhe H_{RB} der Bremsrippen 6 relativ zur Auflagefläche 4 kann dabei günstigerweise, insbesondere bei einem äußeren Radius R_{K} des Kopfes 1 von etwa 4 bis 5 mm, etwa 0,1 bis 0,2 mm betragen.

Die Bremsrippen 6 können - wie dargestellt - jeweils zwei Seitenflächen 6a, 6b von konvexer Form, insbesondere der Form eines Diskussegments, aufweisen. Die Seitenflächen 6a, 6b grenzen dabei an einer insbesondere zentrisch liegenden Kante 6c aneinander. Dadurch wird einerseits insbesondere beim Eindrehen ein hoher Reibwiderstand erreicht, eine spanende Wirkung der Bremsrippen sowohl beim Ein- als auch beim Herausschrauben einer erfindungsgemäßen Schraube jedoch weitestgehend ausgeschlossen.

Die Erfindung ist nicht auf die beschriebenen Ausführungsbeispiele beschränkt. So kann es unter Umständen angebracht sein, daß die Fräsrippen 106 nicht - wie dargestellt - hinsichtlich ihrer Längserstreckung L_{F} auf Mantellinien der Auflagefläche 4 verlaufen, deren Projektion auf einen durch den Kopf 1 verlaufenden Abschnitt der Schraubenlängsachse X-X der erfindungsgemäßen Schraube fällt, sondern (ähnlich wie das Gewinde 3) auf einer zumindest teilweise in Umfangsrichtung verlaufenden schraubenlinieförmigen Bahn liegen.

### Bezugszeichen

- 1: Kopf
- 2: Schaft
- 2a: kopfnaher Bereich von 2
- 3: Gewinde
- 4: Auflagefläche von 1
- 5: oberer Bereich von 4
- 5a: erster Konvergenzbereich von 4 (Winkel α)
- 5b: zweiter Konvergenzbereich von 4 (Winkel β)
- 6: Bremsrippe
- 6a, 6b: Seitenflächen von 6
- 6c: Kante zwischen 6a und 6b
- 7: Gewindekante von 3
- 8: Endbereich von 3

- 105: unterer Bereich von 4
- 106: Fräsrippe
- 106a: Kante von 106

- A: Außenradius von 3 (Abstand von 7 zu X-X)
- E: Eindrehrichtung
- H_{A}: axiale Länge von 4
- H_{B}: axiale Länge von 5
- H_{F}: axiale Länge von 105 im Bereich von 4
- H_{K}: Höhe von 7
- H_{RB}: Höhe von 6
- H_{RF}: Höhe von 106
- H_{T}: axiale Länge von 106 im Bereich von 2a
- L_{F}: Längserstreckung von 106
- L_{R}: Längserstreckung von 6
- P: Projektion von 6
- R_{E}: Kernradius von 2
- R_{K}: äußerer Radius von 1
- R_{S}: Radius von 2 in 2a
- X-X: Schraubenlängsachse (durch 1 und 2)

- α: Konvergenzwinkel von 5a
- β: Konvergenzwinkel von 5b

## Patentansprüche

1. Senkkopfschraube mit einem Kopf (1), mit einem Schaft (2) und mit einem sich zumindest teilweise über den Schaft (2) erstreckenden Gewinde (3), wobei der Kopf (1) eine zumindest abschnittsweise in Richtung auf den Schaft (2) konisch zulaufende Auflagefläche (4) aufweist, wobei in einem unteren, dem Schaft (2) zugewandten Bereich (105) der Auflagefläche (4) Fräsrippen (106) angeordnet sind, wobei das Gewinde (3) eine Gewindekante (7) aufweist, die über den Schaft (2), zumindest abschnittsweise, mit konstantem Außenradius (A) verläuft,
**dadurch gekennzeichnet, daß** sich die Fräsrippen (106) in der Unteransicht gesehen in einem Ringbereich erstrecken, der außenseitig durch den konstant verlaufenden Außenradius (A) der Gewindekante (7) und innenseitig durch einen äußeren Radius (R_{S}) des Schaftes (2) begrenzt ist.

2. Senkkopfschraube nach Anspruch 1,
**dadurch gekennzeichnet, daß** der Bereich (105) der Auflagefläche (4), in dem die Fräsrippen (106) angeordnet sind, hinsichtlich seiner axialen Länge (H_{F}) nicht größer ist als etwa 60 Prozent einer axialen Länge (H_{A}) der konisch zulaufenden Auflagefläche (4).

3. Senkkopfschraube nach Anspruch 1 oder 2,
**dadurch gekennzeichnet, daß** die Fräsrippen (106) hinsichtlich ihrer Längserstreckung (L_{F})auf Mantellinien der Auflagefläche (4) verlaufen, deren Projektion auf einen durch den Kopf (1) verlaufenden Abschnitt der Schraubenlängsachse (X-X) fällt.

4. Senkkopfschraube nach einem der Ansprüche 1 bis 3,
**dadurch gekennzeichnet, daß** die Fräsrippen (106) in ihrem Grundriß etwa die Form eines Kreissegments aufweisen, wobei eine in Einschraubrichtung (E) weisende Kante (106a) des Kreissegments flach oder konkav ausgebildet ist.

5. Senkkopfschraube nach einem der Ansprüche 1 bis 4,
**dadurch gekennzeichnet, daß** die Fräsrippen (106) über ihre Längserstreckung (L_{F}) eine veränderliche Höhe (H_{RF}) aufweisen.

6. Senkkopfschraube nach Anspruch 5,
**dadurch gekennzeichnet, daß** die Höhe (H_{RF}) der Fräsrippen (106) über der Längserstrekkung (L_{F}) der Fräsrippen (106) außenseitig beginnend von einem Wert Null relativ zur Auflagefläche (4) zunächst ansteigt und dann relativ zur Auflagefläche (4) etwa konstant verläuft.

7. Senkkopfschraube nach einem der Ansprüche 1 bis 6,
**dadurch gekennzeichnet, daß** der Maximalwert einer/der Höhe (H_{RF}) der Fräsrippen (106) relativ zur Auflagefläche (4), insbesondere bei einem äußeren Radius (R_{K}) des Kopfes (1) von etwa 4 bis 5 mm, etwa 0,3 mm beträgt.

8. Senkkopfschraube nach einem der Ansprüche 1 bis 7,
**gekennzeichnet durch** vier bis acht, insbesondere sechs, Fräsrippen.

9. Senkkopfschraube nach einem der Ansprüche 1 bis 8,
**dadurch gekennzeichnet, daß** die konisch in Richtung auf den Schaft (2) zulaufende Auflagefläche (4) in einem ersten, dem Schaft abgewandten Kopfabschnitt (5a) unter einem Winkel (α) von etwa 90° und in einem zweiten, dem Schaft zugewandten Kopfabschnitt (5b) unter einem Winkel (β) von etwa 50° bis 65° konvergiert.

10. Senkkopfschraube nach Anspruch 9,
**dadurch gekennzeichnet, daß** die Fräsrippen (106) in dem dem Schaft (2) zugewandten zweiten Kopfabschnitt (5b) angeordnet sind.

11. Senkkopfschraube nach einem der Ansprüche 1 bis 10,
**dadurch gekennzeichnet, daß** in einem oberen, dem Schaft (2) abgewandten Bereich (5) der Auflagefläche (4) Bremsrippen (6) angeordnet sind.

12. Senkkopfschraube nach Anspruch 11,
**dadurch gekennzeichnet, daß** der Bereich (5) der Auflagefläche (4), in dem die Bremsrippen (6) angeordnet sind, hinsichtlich seiner axialen Länge (H_{B}) nicht größer ist als etwa 60 Prozent einer axialen Länge (H_{A}) der konisch zulaufenden Auflagefläche (4).

13. Senkkopfschraube nach Anspruch 11 oder 12,
**dadurch gekennzeichnet, daß** die Bremsrippen (6) hinsichtlich ihrer Längserstreckung (L_{R}) auf Mantellinien der Auflagefläche (4) verlaufen, deren Projektion (P) auf einen durch den Kopf (1) verlaufenden Abschnitt der Schraubenlängsachse (X-X) fällt.

14. Senkkopfschraube nach einem der Ansprüche 11 bis 13,
**dadurch gekennzeichnet, daß** sich die Bremsrippen (6) in der Unteransicht gesehen in einem Ringbereich erstrecken, der außenseitig etwa durch einen äußeren Radius (R_{K}) des Kopfes (1) und innenseitig etwa durch den Außenradius (A) des Gewindes (3) begrenzt ist.

15. Senkkopfschraube nach einem der Ansprüche 11 bis 14,
**dadurch gekennzeichnet, daß** die Bremsrippen (6) jeweils zwei Seitenflächen (6a, 6b) von konvexer Form, insbesondere der Form eines Diskussegments, aufweisen, wobei die Seitenflächen (6a, 6b) an einer, insbesondere zentrisch liegenden Kante (6c) aneinandergrenzen.

16. Senkkopfschraube nach einem der Ansprüche 11 bis 15,
**dadurch gekennzeichnet, daß** die Bremsrippen (6) über ihre Längserstreckung (L_{R}) eine veränderliche Höhe (H_{RB}) aufweisen.

17. Senkkopfschraube nach Anspruch 16,
**dadurch gekennzeichnet, daß** die Höhe (H_{RB}) der Bremsrippen (6) über der Längserstreckung (L_{R}) der Bremsrippen (6) von einem Wert Null relativ zur Auflagefläche (4) ausgehend bogenförmig verläuft und bei einem Wert Null relativ zur Auflagefläche (4) endet.

18. Senkkopfschraube nach einem der Ansprüche 11 bis 17,
**dadurch gekennzeichnet, daß** der Maximalwert der Höhe (H_{RB}) der Bremsrippen (6) relativ zur Auflagefläche (4), insbesondere bei einem äußeren Radius (R_{K}) des Kopfes (1) von etwa 4 bis 5 mm, etwa 0,1 bis 0,2 mm beträgt.

19. Senkkopfschraube nach einem der Ansprüche 11 bis 18,
**gekennzeichnet durch** zwei bis sechs, insbesondere vier, Bremsrippen (6).

20. Senkkopfschraube nach einem der Ansprüche 11 bis 19,
**dadurch gekennzeichnet, daß** die Bremsrippen (6) in dem dem Schaft (2) abgewandten ersten Kopfabschnitt (5a) angeordnet sind.

## Claims

1. Countersunk head screw with a head (1), with a shank (2) and with a thread (3) extending at least partially over the shank (2), the head (1) having a bearing surface (4), at least a portion of which tapers conically in the direction of the shaft (2), cutting ribs (106) being arranged in a lower region (105) of the bearing surface (4) that is facing towards the shank (2), the thread (3) having a thread edge (7), at least a portion of which runs over the shank (2) with a constant outer radius (A), **characterized in that** the cutting ribs (106) extend in an annular region, seen in the view from below, which is bounded on the outside by the constantly running outer radius (A) of the thread edge (7) and on the inside by an outer radius (R_{S}) of the shank (2).

2. Countersunk head screw according to Claim 1,
**characterized in that** the region (105) of the bearing surface (4) in which the cutting ribs (106) are arranged is not greater with respect to its axial length (H_{F}) than approximately 60 per cent of the axial length (H_{A}) of the conically tapering bearing surface (4).

3. Countersunk head screw according to Claim 1 or 2, **characterized in that**, with regard to their longitudinal extent (L_{F}), the cutting ribs (106) run on generating lines of the bearing surface (4) of which the projection falls on a portion of the longitudinal axis (X-X) of the screw that runs through the head (1).

4. Countersunk head screw according to one of Claims 1 to 3, **characterized in that**, in their overall outline, the cutting ribs (106) have approximately the shape of a segment of a circle, an edge (106a) of the segment that points in the direction of screwing in (E) being formed in a flat or concave manner.

5. Countersunk head screw according to one of Claims 1 to 4, **characterized in that** the cutting ribs (106) have a variable height (H_{RF}) over their longitudinal extent (L_{F}).

6. Countersunk head screw according to Claim 5, **characterized in that**, over the longitudinal extent (L_{F}) of the cutting ribs (106), the height (H_{RF}) of the cutting ribs (106) begins on the outside with a value of zero in relation to the bearing surface (4) before initially increasing and then proceeding approximately constantly in relation to the bearing surface (4).

7. Countersunk head screw according to one of Claims 1 to 6, **characterized in that** the maximum value of a/the height (H_{RF}) of the cutting ribs (106) in relation to the bearing surface (4), in particular in the case of an outer radius (R_{K}) of the head (1) of approximately 4 to 5 mm, is approximately 0.3 mm.

8. Countersunk head screw according to one of Claims 1 to 7, **characterized by** four to eight, in particular six, cutting ribs.

9. Countersunk head screw according to one of Claims 1 to 8, **characterized in that** the bearing surface (4) conically tapering in the direction of the shank (2) converges in a first head portion (5a), facing away from the shank, at an angle (α) of approximately 90° and in a second head portion (5b), facing towards the shank, at an angle (β) of approximately 50° to 65°.

10. Countersunk head screw according to Claim 9, **characterized in that** the cutting ribs (106) are arranged in the second head portion (5b), facing towards the shank (2).

11. Countersunk head screw according to one of Claims 1 to 10, **characterized in that** restraining ribs (6) are arranged in an upper region (5) of the bearing surface (4), facing away from the shank (2).

12. Countersunk head screw according to Claim 11, **characterized in that** the region (5) of the bearing surface (4) in which the restraining ribs (6) are arranged is not greater with regard to its axial length (H_{B}) than approximately 60 per cent of an axial length (H_{A}) of the conically tapering bearing surface (4).

13. Countersunk head screw according to Claim 11 or 12, **characterized in that**, with regard to their longitudinal extent (L_{R}), the restraining ribs (6) run on generating lines of the bearing surface (4) of which the projection (P) falls on a portion of the longitudinal axis (X-X) of the screw that runs through the head (1).

14. Countersunk head screw according to one of Claims 11 to 13, **characterized in that** the restraining ribs (6) extend in an annular region, seen in the view from below, which is bounded on the outside approximately by an outer radius (R_{K}) of the head (1) and on the inside approximately by the outer radius (A) of the thread (3).

15. Countersunk head screw according to one of Claims 11 to 14, **characterized in that** the restraining ribs (6) have in each case two side surfaces (6a, 6b) of a convex shape, in particular the shape of a segment of a discus, the side surfaces (6a, 6b) being adjacent to one another at one edge, in particular a cenrally lying edge (6c).

16. Countersunk head screw according to one of Claims 11 to 15, **characterized in that** the restraining ribs (6) have a variable height (H_{RB}) over their longitudinal extent (L_{R}).

17. Countersunk head screw according to Claim 16, **characterized in that**, over the longitudinal extent (L_{R}) of the restraining ribs (6), the height (H_{RB}) of the restraining ribs (6) begins with a value of zero in relation to the bearing surface (4) before proceeding in the form of an arc and ending with a value of zero in relation to the bearing surface (4).

18. Countersunk head screw according to one of Claims 11 to 17, **characterized in that** the maximum value of the height (H_{RB}) of the restraining ribs (6) in relation to the bearing surface (4), in particular in the case of an outer radius (R_{K}) of the head (1) of approximately 4 to 5 mm, is approximately 0.1 to 0.2 mm.

19. Countersunk head screw according to one of Claims 11 to 18, **characterized by** two to six, in particular four, restraining ribs (6).

20. Countersunk head screw according to one of Claims 11 to 19, **characterized in that** the restraining ribs (6) are arranged in the first head portion (5a), facing away from the shank (2).

## Revendications

1. Vis à tête fraisée comprenant une tête (1), une tige (2) et un filet (3) qui s'étend au moins partiellement sur la tige (2), la tête (1) présentant une surface de portée (4) s'étendant, du moins par segments, avec une forme conique en direction de la tige (2), dans laquelle des nervures fraiseuses (106) sont disposées dans une zone inférieure (105) de la surface de portée (4) qui est dirigée vers la tige (2), le filet (3) présentant une arête de filet (7) qui s'étend sur la tige (2) avec un rayon extérieur constant (A), du moins par segments,
**caractérisée en ce que**, vu dans une vue de dessous, les nervures fraiseuses (106) s'étendent dans une zone annulaire qui est limitée extérieurement par le rayon extérieur (A), de valeur constante, de l'arête (7) du filet et qui est limitée intérieurement par un rayon extérieur (R_{S}) de la tige (2).

2. Vis à tête fraisée selon la revendication 1, **caractérisée en ce que** la zone (105) de la surface de portée (4) dans laquelle les nervures fraiseuses (106) sont disposées n'est pas plus grande, en ce qui concerne sa longueur axiale (H_{F}), qu'à peu près 60 % d'une longueur axiale (H_{A}) de la surface de portée (4) qui s'étend avec une forme conique.

3. Vis à tête fraisée selon la revendication 1 ou 2, **caractérisée en ce que** les nervures fraiseuses (106) s'étendent, en ce qui concerne leur extension longitudinale (L_{F}), sur des génératrices de la surface de portée (4) dont la projection tombe sur un segment de l'axe longitudinal (X-X) de la vis qui s'étend à travers la tête (1).

4. Vis à tête fraisée selon une des revendications 1 à 3, **caractérisée en ce qu'**en projection horizontale, les nervures fraiseuses (106) présentent à peu près la forme d'un segment de cercle, un bord (106a) du segment de cercle qui est dirigé dans le sens du vissage (E) étant de forme plate ou concave.

5. Vis à tête fraisée selon une des revendications 1 à 4, **caractérisée en ce que** les nervures fraiseuses (106) présentent une hauteur (H_{RF}) qui varie sur leur extension longitudinale (L_{F}).

6. Vis à tête fraisée selon la revendication 5, **caractérisée en ce que**, sur l'extension longitudinale (L_{F}) des nervures fraiseuses (106), la hauteur (H_{RF}) des nervures fraiseuses (106) croît initialement, vers l'extérieur, en commençant à une valeur nulle, par rapport à la surface de portée (4), puis s'étend avec une valeur à peu près constante, par rapport à la surface de portée (4).

7. Vis à tête fraisée selon une des revendications 1 à 6, **caractérisée en ce que** la valeur maximale d'une hauteur ou de la hauteur (H_{RF}) des nervures fraiseuses (106) par rapport à la surface de portée (4) est en particulier d'environ 0,3 mm dans le cas d'un rayon extérieur (R_{K}) de la tête (1) d'environ 4 à 5 mm.

8. Vis à tête fraisée selon une des revendications 1 à 7, **caractérisée par** quatre à huit, en particulier six, nervures fraiseuses.

9. Vis à tête fraisée selon une des revendications 1 à 8, **caractérisée en ce que** la surface de portée (4) qui s'étend avec une forme conique en direction de la tige (2) converge sous un angle (α) d'environ 90 ° dans un premier segment (5a) de la tête qui est éloigné de la tige et sous un angle (β) d'environ 50 ° à 65 ° dans un deuxième segment (5b) de la tête qui est dirigé vers la tige.

10. Vis à tête fraisée selon la revendication 9, **caractérisée en ce que** les nervures fraiseuses (106) sont disposées dans le deuxième segment (5b) de la tête qui est dirigé vers la tige (2).

11. Vis à tête fraisée selon une des revendications 1 à 10, **caractérisée en ce que** des nervures de freinage (6) sont disposées dans une zone supérieure (5) de la surface de portée (4) qui est éloignée de la tige (2).

12. Vis à tête fraisée selon la revendication 11, **caractérisée en ce que** la zone (5) de la surface de portée (4) dans laquelle les nervures de freinage (6) sont disposées n'est pas plus grande, en ce qui concerne sa longueur axiale (H_{B}), qu'environ 60 pour cent d'une longueur axiale (H_{A}) de la surface de portée (4) qui s'étend avec une forme conique.

13. Vis à tête fraisée selon la revendication 11 ou 12, **caractérisée en ce qu'**en ce qui concerne leur extension longitudinale (L_{R}) , les nervures de freinage (6) s'étendent sur des génératrices de la surface de portée (4) dont la projection (P) tombe sur un segment de l'axe longitudinal (X-X) de la vis qui s'étend à travers la tête (1).

14. Vis à tête fraisée selon une des revendications 11 à 13, **caractérisée en ce que**, vu dans une vue de dessous, les nervures de freinage (6) s'étendent dans une zone annulaire qui est limitée extérieurement par un rayon extérieur (R_{K}) de la tête (1) et intérieurement à peu près par le rayon extérieur (A) du filet (3).

15. Vis à tête fraisée selon une des revendications 11 à 14, **caractérisée en ce que** les nervures de freinage (6) présentent chacune deux surfaces latérales (6a, 6b) de forme convexe, en particulier de la forme d'un segment de disque, les surfaces latérales (6a, 6b) étant adjacentes à une arête (6c) qui est en particulier en position centrée.

16. Vis à tête fraisée selon une des revendications 11 à 15, **caractérisée en ce que** les nervures de freinage (6) présentent une hauteur (H_{RB}) qui varie sur leur extension longitudinale (L_{R}).

17. Vis à tête fraisée selon la revendication 16, **caractérisée en ce que**, sur l'extension longitudinale (L_{R}) des nervures de freinage (6), la hauteur (H_{RB}) des nervures de freinage (6) s'étend en arc en partant d'une valeur nulle par rapport à la surface de portée (4) et se termine à une valeur nulle par rapport à la surface de portée (4).

18. Vis à tête fraisée selon une des revendications 11 à 17, **caractérisée en ce que** la valeur maximale de la hauteur (H_{RB}) des nervures de freinage (6) par rapport à la surface de portée (4) est en particulier d'environ 0,1 à 0,2 mm dans le cas d'un rayon extérieur (R_{K}) de la tête (1) d'environ 4 à 5 mm.

19. Vis à tête fraisée selon une des revendications 11 à 18, **caractérisée par** deux à six, en particulier quatre, nervures de freinage (6).

20. Vis à tête fraisée selon une des revendications 11 à 19, **caractérisée en ce que** les nervures de freinage (6) sont disposées dans le premier segment (5a) de la tête qui est éloigné de la tige (2).
